(19) Europäisches Patentamt
European Patent Office
Office européen des brevets

(11) EP 2 699 392 B1

(12) **EUROPEAN PATENT SPECIFICATION**

(45) Date of publication and mention of the grant of the patent:
**21.10.2015 Bulletin 2015/43**

(21) Application number: **11717215.5**

(22) Date of filing: **19.04.2011**

(51) Int Cl.:
***B25J 9/16*** *(2006.01)*

(86) International application number:
**PCT/EP2011/056273**

(87) International publication number:
**WO 2012/143044 (26.10.2012 Gazette 2012/43)**

# (54) AN INDUSTRIAL ROBOT HAVING A KINEMATICALLY REDUNDANT ARM AND A METHOD FOR CONTROLLING THE ROBOT

INDUSTRIEROBOTER MIT EINEM KINEMATISCH REDUNDANTEN ARM UND VERFAHREN ZUR STEUERUNG DES ROBOTERS

ROBOT INDUSTRIEL DOTÉ D'UN BRAS REDONDANT EN CINÉMATIQUE ET PROCÉDÉ DE COMMANDE DU ROBOT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**26.02.2014 Bulletin 2014/09**

(73) Proprietor: **ABB Research Ltd.**
**8050 Zürich (CH)**

(72) Inventor: **STRANDBERG, Morten**
**S-724 69 Västerås (SE)**

(74) Representative: **Savela, Reino Aleksi**
**ABB AB**
**Intellectual Property**
**Ingenjör Bååths Gata 11**
**721 83 Västerås (SE)**

(56) References cited:
- **JIN-LIANG CHEN ET AL: "Avoidance of obstacles and joint limits for end-effector tracking in redundant manipulators", CONTROL, AUTOMATIOM, ROBOTICS AND VISION, 2002. ICARCV 2002. 7TH INTER NATIONAL CONFERENCE ON DEC. 2-5, 2002, PISCATAWAY, NJ, USA,IEEE, vol. 2, 2 December 2002 (2002-12-02), pages 839-844, XP010663152, DOI: 10.1109/ICARCV.2002.1238531 ISBN: 978-981-04-8364-7**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

FIELD OF THE INVENTION

The present invention relates to an industrial robot including a robot arm with a redundant number of joints and provided with a tool interface movable in a plurality of degrees of freedom, with a tool centre point defined in relation to the tool interface, and a user operated control device for manually controlling the movements of the tool centre point during a teach mode. The present invention further relates to a method for controlling a robot having a kinematically redundant arm.

PRIOR ART

During the teach mode the robot operator manually moves the robot to a plurality of points along the path in order to teach the robot the desired robot path. When the operator moves the robot it is possible that one of the joints comes to close to its joint limit and the robot is stopped. The robot often stops during teach mode because a joint limit is reached. To get out of the joint limit, without leaving the current tool centre point position, the user has to switch to arm-angle jogging and then back to Cartesian jogging again. During the arm-angle jogging, the robot operator must manually move the robot away from the joint limit and try to reconfigure the robot to a new configuration which avoids the joint limit.

There is a growing interest in kinematically redundant robots for commercial applications and a number of robot companies have products with more than 6 degrees-of-freedom (DOF) robots in their product portfolio. The most important advantage with the extra degree(s) of freedom when using redundant manipulators is the more flexible reach that can be achieved. This is possible because of the so called self motion that is obtained because of the redundant degrees of freedom. In for example a arm robot with 7 actuated joints, the self motion makes it possible to obtain arm movements to avoid obstacles without changing the position and orientation of the tool.

For a kinematically redundant robot there is no unique path in joint space for moving the tool centre point along a given path in the Cartesian space. In general there are infinitely many joint space paths that achieve the desired tool centre point path. Due to the problem of inverse kinematics of redundant robots being undetermined, it is often cast as an optimization problem. Hence, the tool centre point path should be followed while at the same time a goal function is maximized. The goal function can be related anything from staying away from joint limits to avoiding singularities or physically obstacles.

US 5,430,643 discloses a 7DOF robot arm with an end effector controlled by a processor employing a 6-by-7 Jacobian matrix for defining location and orientation of the end effector in terms of the rotational angle of the joints. The redundant joint is used to determine trajectories which avoid singularities, joint limits and physically obstacles. This is done by using a 6x7 matrix which is extended by an additional row, which depends on which obstacle to be avoided, e.g. a joint limit, a singularity or a physical obstacle. The search for new joint angles is carried out based on an optimization of the matrix. The optimization is implemented in the servo controller in connection to the servo loops in the robot control unit. This means that the optimization is carried out each time the servo loop is run through, which requires a lot of computational power.

JIN-LIANG CHEN et al.: "Avoidance of obstacles and joint limits for end-effector tracking in redundant manipulators", CONTROL, AUTOMATION, ROBOTICS AND VISION, 2002, ICARCV 2002, 7TH INTERNATIONAL CONFERENCE ON DEC. 2-5, 2002, PISCATAWAY, NJ, USA,IEEE,vol. 2, 2 December 2002, pages 839-844, XP010663152, ISBN: 978-981-04-8364-7 DOI: 10.1109/ICARCV.2002.1238531 also discloses an arm with a kinematically redundant number of joints.

Further, there are several problems with using such an optimization method during run time of the robot. During run time the following features are desired:

- e the robot path must be completely predictable,
- e if the robot is moved backward from one point in the robot program the robot must come back to the start point again, i.e. the path from A to B shall be the same as the path from B to A. Accordingly, it must be possible to an operator to predict the movement of the robot when moving the robot from one position to another.
- • Moving from a point A1 to B and moving from a point A2 to B should result in the same configuration at point B.

Accordingly, it is not easy to adopt optimization methods at runtime for kinematically redundant robots.

OBJECTS AND SUMMARY OF THE INVENTION

The object of the present invention is to provide an improved industrial robot including a kinematically redundant arm which alleviates the above mentioned problems.

This object is achieved with an industrial robot as defined in claim 1.

The industrial robot comprises: a robot arm with a kinematically redundant number of joints and provided with a tool interface movable in a plurality of degrees of freedom, and a tool centre point defined in relation to the tool interface, a user operated control device for manually controlling the movements of the tool centre point during teach mode, and adapted to generate information on user instructed movements for the tool centre point, and a control unit adapted to receive the information on instructed movements from the user operated control device, and based thereon control the movements of the robot arm during the teach mode, wherein the control unit includes a motion planner adapted to determine how the robot arm should move in order to be able to execute the instructed movement by carrying out an interpolation of the instructed movement including a plurality of interpolation steps, each interpolation step including calculation of joint angles for the robot arm for an increment of the instructed movement, and an optimizing module which is adapted to search in the null space of the redundant robot arm for a new joint configuration that increases the distance to the joint limit with the tool centre point unchanged. According to the invention, the motion planner is adapted for each interpolation step to check whether any of the joints of the robot arm is close to its joint limit, and if this is the case to run the optimizing module and to replace calculated joint angles for the increment with joint angles of the new joint configuration.

When the robot is manually moved (jogged) in teach mode the motion planner checks for each interpolation step if any of the joints of the robot is close to its joint limit. If this is the case, a search is carried out in the null space of the redundant robot for a new configuration that increases the distance to the joint limit with the tool centre point of the robot unchanged. At least the position of the tool centre point is unchanged. Preferably, the orientation of the tool centre point is also unchanged. The robot is then moved to the new configuration. With null space is meant the joint space movements for which the position, and preferably also the orientation, of the tool centre point are unchanged.

According to the invention, the optimization is made by the motion planner. The joint angles of each increment are optimized. An increment is a small part of the instructed movement path. This means that the optimization only has to be carried out as many times as the number of increments. This means that the number of times the optimization is carried out is significantly less compared to the prior art, and accordingly requires less computational power, A further advantage with carrying out the optimization in the motion planner instead of in the servo controller is that the optimization is done earlier which provides a better following of the path. This is due to the fact that all the following steps in the path generation will consider the modified path.

When the path is modified in the servo controller, which is the end step, as described in the prior art it can be too late to avoid on obstacle such as a joint limit. For example if the motion planner detects that the robot is on its way to collide with a physical obstacle, the invention ensures that the robot is stopped before a collision occurs. If a collision is detected in the servo loop as in the prior art, it can be too late to stop the robot before the collision occurs.

When the robot comes close to a joint limit during teach mode an automatic search for a new robot configuration that avoids the joint limit with position and orientation of the tool centre point unchanged is made. Further, the robot arm is automatically moved to the new arm configuration. The user of the robot benefits from this in that the user experience is increased because he has not to switch between different jogging modes as often as is the case today. The robot operator does not have to worry about joint limits and can continue to move the robot in a desired direction without having to stop the robot. This facilitates for the robot operator to jog the robot during the teach mode. The present invention reduces the time needed for teaching the robot a robot path.

According to an embodiment of the invention, the control unit is adapted to switch between a teach mode and a run-time mode, and the motion planner is adapted to check whether the control unit is in teach mode or in run-time mode, and to only run the optimizing module during teach mode and to omit the optimizing module when the robot is in run-time mode. Further, the motion planner is adapted to only check whether any of the joints of the robot arm is close to its joint limit if the control unit is in teach mode, and to not check whether any of the joints of the robot arm is close to its joint limit if the control unit is in run-time mode. As seen from the list of issues above, it is not easy to adopt optimization methods at runtime for kinematically redundant robots. However, the situation is somewhat different in teach mode. In teach mode the speed is slow and the generated movement orders are so short that optimization over the whole segment is feasible. Furthermore, during teach mode, the listed requirements above do not have to be fulfilled. Hence, optimization of the inverse kinematics is feasible during teach mode. The robot control program is determined during the teach mode, and this program is later executed during run-time mode. If the program has not been changed afterwards, the movement path will stay optimized with regard to joint limits and other obstacles, such as singularities and collisions with physical object, during the runtime. Thereby, the problem with using optimization methods during runtime is solved. Accordingly, it is possible to fulfil the demands listed above which are required during runtime. According to the invention, the optimization is only carried out during teach mode and is turned off during runtime mode. When switching to run-time mode, the path which the robot follows in joint space is uniquely determined by the starting position and the goal position. Hence, the robot is fully predictable at runtime, while being easy to work with at teach-in.

According to an embodiment of the invention, the robot arm has seven degrees of freedom, and the optimising module uses an optimization method together with a 7x7 Jacobian matrix to search the null space of the arm. For example, the optimization method is the Newton-Raphson method. The 7x7 Jacobian matrix provides a relation between joint velocities and Cartesian velocities for the robot arm. The search for a new joint configuration used the optimization method to optimize the arm-angle of the robot arm based on the 7x7 Jacobian matrix.

According to an embodiment of the invention, the optimizing module is adapted to search in the null space of the redundant robot arm for a new joint configuration that increases the distance to the joint limit while maintaining a safety distance to the joint limit. The distance to the joint limit gives a safe margin to the joint limit. This embodiment ensures that the joint angle stays on the outside of the join limit, even though only the end point of each path increment is optimized.

According to an embodiment of the invention, the optimizing module is adapted to search in the null space of the redundant robot arm for a new joint configuration that increases the distance to a singularity with the tool centre point unchanged, and the motion planner is adapted for each interpolation step to check whether the control unit is in teach mode or in run-time mode, and if the control unit is in teach mode to check whether the robot arm is close to a singularity, and if this is the case to run the optimizing module and to replace calculated joint angles for the increment with joint angles of the new joint configuration.

According to an embodiment of the invention, the optimizing module is adapted to search in the null space of the redundant robot arm for a new joint configuration that increases the distance to a physical obstacle in the work space of the robot with the tool centre point unchanged, and the motion planner is adapted for each interpolation step to check whether the control unit is in teach mode or in run-time mode, and if the control unit is in teach mode, to check whether the robot arm is close to a physical obstacle in the work space of the robot, and if this is the case to run the optimizing module and to replace calculated joint angles for the increment with joint angles of the new joint configuration. The robot will be experienced as more agile if the optimization takes potential collisions with physical objects into consideration. The user can focus on the task at hand without worrying about colliding with something. This can, for example, be useful in situations where the available workspace is very restricted.

When the robot is manually moved (jogged) in teach mode the motion planner checks for each interpolation step if the axes of the robot is close to their joint limit, or the robot is close to a singularity, or close to an obstacle in the work space. If this is the case, a search is made in the null space of the redundant robot for a new configuration that increases the distance to the joint limit, the singularity or the physical obstacle with the tool centre point of the robot unchanged.

According to another aspect of the invention this object is achieved by a method for controlling an industrial robot including a robot arm with a redundant number of joints and provided with a tool interface movable in a plurality of degrees of freedom, with a tool centre point defined in relation to the tool interface, and a user operated control device for manually controlling the movements of the tool centre point during a teach mode as defined in claim 9.

The method comprises:

- receiving information on user instructed movements from the user operated control device,
- dividing the instructed movement is into a plurality of increments,
- determining joint angles for the robot arm for each of the increments by carrying out an interpolation step for each increment, each interpolation step including calculating joint angles for the increment based on the instructed movement, and
- controlling the motion of the robot arm based on the determined joint angles. According to the invention, the interpolation step includes the following optimization steps:
- checking whether any of the joints of the robot arm is close to its joint limit based on the calculated joint angles and limit values for the joints, and if this is the case,
- searching in the null space of the redundant robot arm for a new joint configuration that increases the distance to the joint limit with the tool centre point unchanged, and
- replacing the calculated joint angles with the joint angles of the new joint configuration.

## BRIEF DESCRIPTION OF THE DRAWINGS

The invention will now be explained more closely by the description of different embodiments of the invention and with reference to the appended figures.

Fig. 1 shows an example of a kinematically redundant robot during teach mode.

Fig. 2 shows a block diagram of an example of a robot control unit.

Fig. 3 shows an example of a robot path divided into a plurality of increments during interpolation of the path.

Fig. 4 shows a flow diagram illustrating an example of a method for controlling a kinematically redundant robot according to the invention.

Fig. 5 shows a flow diagram illustrating another example of a method for controlling a kinematically redundant robot according to the invention.

## DETAILED DESCRIPTION OF PREFERRED EMBODIMENTS OF THE INVENTION

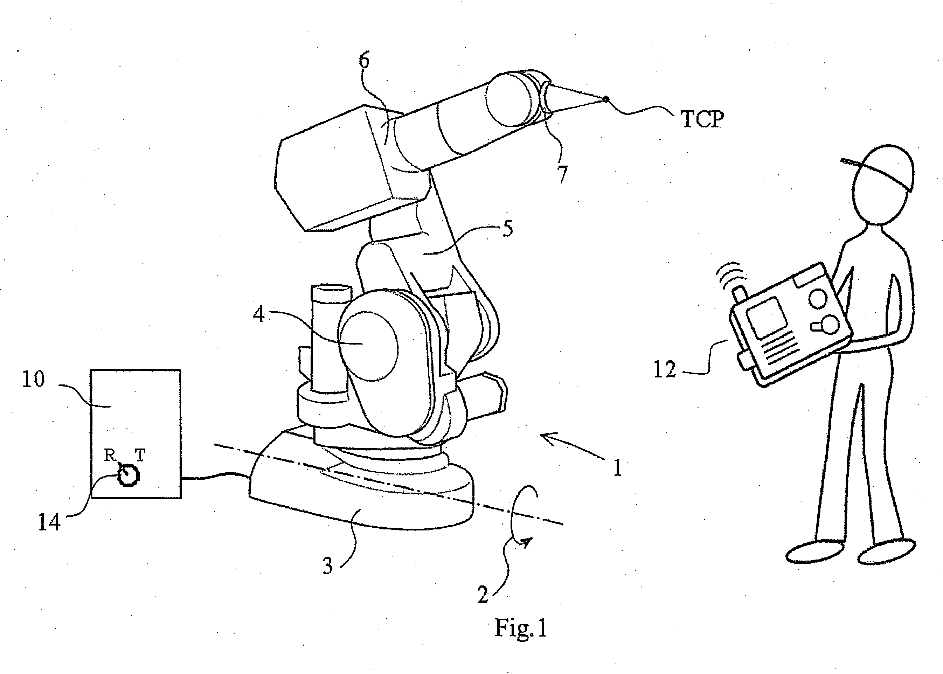

Figure 1 shows an industrial robot including a robot arm 1 with a redundant number of joints. In this example, the robot arm has seven joints. In this example, the robot arm 1 has three main axes, three wrist axes and a seventh axis 2 which makes it possible to tilt the robot in two opposite sideway directions. A stationary foot 3, usually referred to as the base of the robot, supports a stand 4 that is rotatable about a first axis. The stand supports a first arm part 5 that is rotatable about a second axis. The first arm part supports a second arm part 6, which is rotatable about a third axis. The second arm part supports a tool interface 7 that is rotatable about a fourth, a fifth and a sixth axis. The tool interface 7 supports a tool, in which an operating point, called Tool Centre Point (TCP), is defined in relation to the tool interface. The whole robot arm is rotatable about a seventh axis 2 going through the base of the robot. The movements of the robot arm 1 are controlled by a robot controller 10. The robot also includes a user operated control device 12 for manually controlling the movements of the tool centre point during teaching and programming of the robot.

An industrial robot is programmed to carry out work along an operating path. Existing practice for programming a robot involves on-line teaching the robot a sequence of working points by means of a portable user operated control device 12, generally denoted a Teach Pendant Unit (TPU). The teach pendant unit comprises operator control means, for example a joystick, a ball, or a set of buttons, which the robot operator uses to instruct the robot movement. To manually move the robot is often called to jog the robot. When jogging the robot, it is common to use an operating device having a joystick with three or more axes for controlling the motions of the robot. The teach pendant unit further comprises a visual display unit, and safety equipment including an enabling device and an emergency stop button. In order to teach the robot during on-line programming, the robot is manipulated to positions and orientations along the desired operating path. These positions and orientations are stored as instructions in a memory in the control unit. The robot program is generated, based on the specified positions and orientations.

An industrial robot can be operated in two different modes: a teach mode and a run-time mode. When the robot is in the teach mode, the movements of the robot are controlled by the portable control device 12. When the robot is in run-time mode, the movements of the robot are controlled in accordance with instructions of a control program. A robot operator uses the operating device for manually controlling the movements of the robot, for example, to teach or program the robot to follow an operating path. The control unit is provided with a switch 14 for switching between teach mode and run-time mode. The control device 12 is adapted to generate information on user instructed movements for the tool centre point and to send information on the instructed movements to the control unit 10. The control unit 10 is adapted to receive the information on instructed movements from the user operated control device 12, and based thereon control the movements of the robot arm during the teach mode.

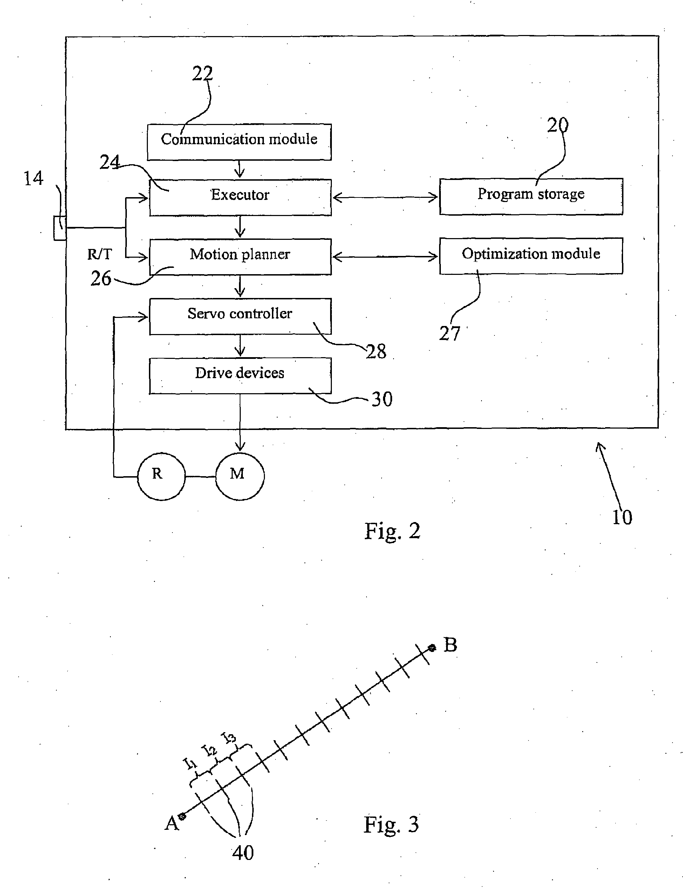

Figure 2 shows a block diagram of an example of a robot control unit 10. The control unit includes program storage 20 for storing robot control programs comprising program instructions including movement instructions for the manipulator, a communication module 22 for receiving movement instructions from the user operated control device 12, and an executor 24 adapted to execute the stored robot program instructions and the received movement instructions from the control device 12.

The control unit 10 further includes a motion planner 26 adapted to receive instructions from the program executor 17 and based thereon determine how the manipulator should move in order to be able to execute the movement instructions for the robot. The motion planner is often denoted a path planner. The motion planner 26 is adapted to perform an interpolation of the movements of the robot arm 3. The motion planner 26 determines robot paths, based on instructions received from the executer 24, and generates reference values comprising desired values for position, speed and acceleration of the motors that actuates the movements of the joints of the robot arm. The motion planner plans how the instructed movement should be performed by carrying out an interpolation of the movement. The interpolation includes dividing the instructed movement into a plurality of small increments, and calculating joint angles for all axes of the robot for the each increment. With joint angles is meant the angle of the axes of the robot arm. In this embodiment the motion planner calculated the joint angles for the end position of the increment. However, in another embodiment it is possible to calculate the joint angles of another position of the increment, for example, an intermediate position of the increment.

During teach mode, the motion planner is adapted, for each interpolation step, to check whether any of the calculated joints angles of the robot arm is close to its joint limit. This is, for example, done by comparing the calculated joint angles for the end positions of the increments with limit values for the joint angles of the robot axes and checking whether any of the joint angles exceeds the joint limit with a predetermined limit value. The predetermined limit value is, for example, two degrees. The limit value gives a safe margin to the joint limit. The control unit also includes an optimization module 27 adapted, upon command from the motion planner, to search in the null space of the redundant robot arm for a new joint configuration that increases the distance to the joint limit with the tool centre point unchanged.

Preferably, the optimizing module is adapted to search for a new joint configuration that increases the distance to the joint limit while maintaining a safety distance to the joint limit. The safety distance is suitably in the interval 1-3 degrees. The safety distance to the joint limit gives a safe margin to the joint limit. The safety distance needed depends on the length of the increments. The longer the increments are, the larger must the safety distance be. For example, the distance is selected as the previously mentioned predetermined limit value. Input to the optimization module is the calculated joint angles and output from the optimization module is new joint angles which replace the calculated joint angles. The motion planner is adapted to run the optimizing module if any of the calculated joint angles is close to its joint limit, and to replace the calculated joint angles for the increment with the new joint angles received from the optimization module.

Optionally, the motion planner is adapted during teach mode to check whether the robot arm is close to a singularity and if this is the case to run the optimization module. In that case the optimizing module is adapted, upon command from the motion planner, to search in the null space of the redundant robot arm for a new joint configuration that increases the distance to a singularity with the tool centre point unchanged. Preferably, the optimizing module is adapted to search for a new joint configuration that increases the distance to the singularity while maintaining a safety distance to the singularity.

Optionally, the motion planner is adapted during teach mode to check whether the robot arm is close to a physical obstacle in the work space of the robot, and if this is the case to run the optimization module. In that case, the optimizing module is adapted, upon command from the motion planner, to search in the null space of the redundant robot arm for a new joint configuration that increases the distance to a physical obstacle in the work space of the robot with the tool centre point unchanged. Preferably, the optimizing module is adapted to search for a new joint configuration that increases the distance to the physical obstacle while maintaining a safety distance to the obstacle. For example, the control unit includes a data storage for storing information on positions and shapes of obstacles in the work space of the robot, and the motion planner is adapted to determine the position of the robot arm based on the computed joint angles, and to determine whether the robot arm is close to an obstacle in the work space by comparing the position of the robot and with the positions of obstacles in the work space.

When the robot is in teach mode, the motion planner is adapted to run the optimization module if necessary. However, when the robot is in run-time mode, the motion planner is adapted to not carry out any of the checks of whether the robot arm is close to a joint limit, a singularity or a physical obstacle, and accordingly not to run the optimization module. Thus, the optimization module is only run during teach mode and never during run-time mode.

When the motion planner has determined joint angles for the robot arm for an increment, the determined joint angles are converted into motor references. If the robot is in teach mode, the determined joint angles are stored and a robot control program is generated based on the stored joint angles. The motion planner transmits the computed motor references to servo controllers 28. The robot control unit 10 comprises a plurality of servo controllers 28, which regulate the positions of the robot joints in accordance with the reference values received from the motion planner. The robot control unit 10 also comprises a plurality of drive devices 30. The robot control unit comprises one servo controller and one drive device for each joint of the robot. Each joint of the robot is provided with a motor M actuating the movement of the joint, and a device, e.g a resolver R, for measuring the angle of the joint. The output signals from the resolvers R are fed back to the servo controllers 28. The servo controllers 28 compare the reference values from the motion planner 26 with the measured angular values received from the resolvers R and based thereon generate control signals to the drive devices 30.

The robot controller includes software as well as hardware, such as input and output means, a processor unit including one or more central processing units (CPU), for handling main functions of the robot controller such as executing robot control programs, performing path planning, providing orders to the drive unit of the robot regarding movements of the manipulator.

Figure 3 shows an example of an instructed movement A-B. During the interpolation of the movement, the instructed movement is divided into a plurality of small increments $I_1$, $I_2$, $I_3$ - $I_n$. An increment is a small part of the instructed movement. The motion planner is adapted to carry out an interpolation step, for each of the increments. The interpolation step includes calculating the joint angles for the robot arm for the end positions 40 of the increments.

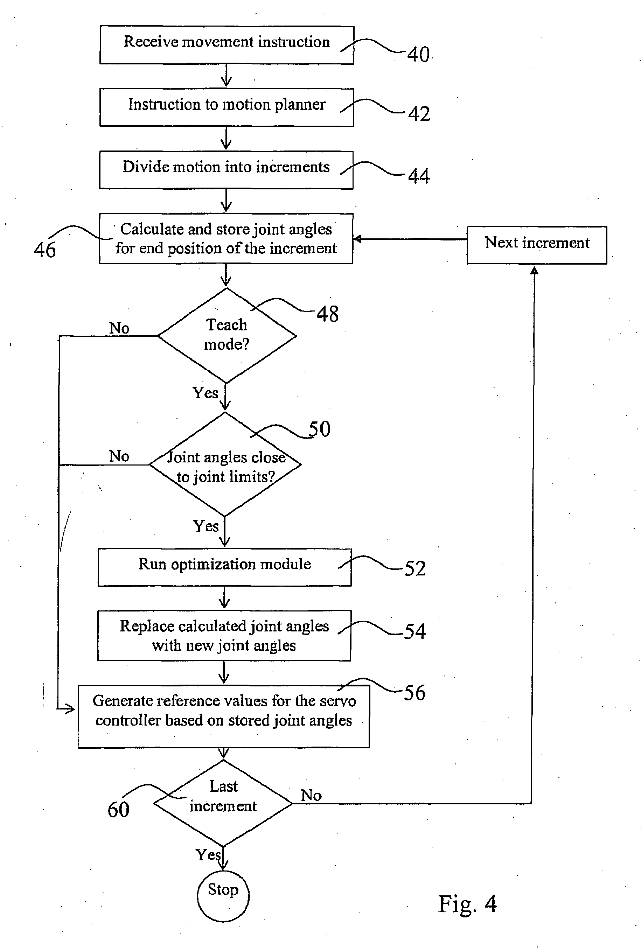

Figure 4 shows a flow diagram of an example of a method for controlling an industrial robot having a robot arm with a redundant number of joints according to the invention. It will be understood that each block of the flow chart can be implemented by computer program instructions.

A movement instruction is received, block 40. During teach mode, the movement instruction is received from the user operated control device 12. During run-time mode, the movement instruction is received from the program storage 20. The executer 24 handles the movement instructions and provides further instructions to the path motion planner based in the instructed movement. The executer 24 sends instructions for the movement to the motion planner 26, block 42. The motion planner receives the instructions from the executer 24 and starts interpolation of the instructed movement. The instructed movement is divides into a plurality of smaller increments, block 44, and an interpolation step, blocks 46 - 56, is carried out for each of the increments. The interpolation step includes calculation of joint angles for the end position of the increment, block 46. The calculated joint angles are stored. The motion planner checks whether the robot is in teach mode or in run-time mode, block 48. If the robot is in run-time mode, reference values for the server controller 28 is generated based on the stored joint angles for the first increment, block 56. The steps 46 and 56 are repeated for each increment until the last increment has been processed block 60.

If the robot is in teach mode, block 48, the motion planner checks whether any of the calculated joint angles for the end position of the increment is close to its joint limit by comparing the calculated joint angles with limit values for the joints, block 50. If none of the joints is closed to its joint limit, reference values for the server controller 28 is generated based on the stored joint angles for the increment, block 56. If any of the joins is closed to its joint limit, the optimization module 27 is run, block 52. The optimization module searches in the null space of the redundant robot arm for a new joint configuration that increases the distance to the joint limit with the tool centre point unchanged. How this search can be carried out will be described in more detail below. The motion planner replaces the previously calculated joint angles with new joint angles received from the optimization module, block 54, and reference values for the server controller is generated based on the new joint angles, block 56. The interpolation loop, block 46 - 56, is repeated for all the increments until the last increment has been processed, block 60. The robot is moved according to the determined joint angles.

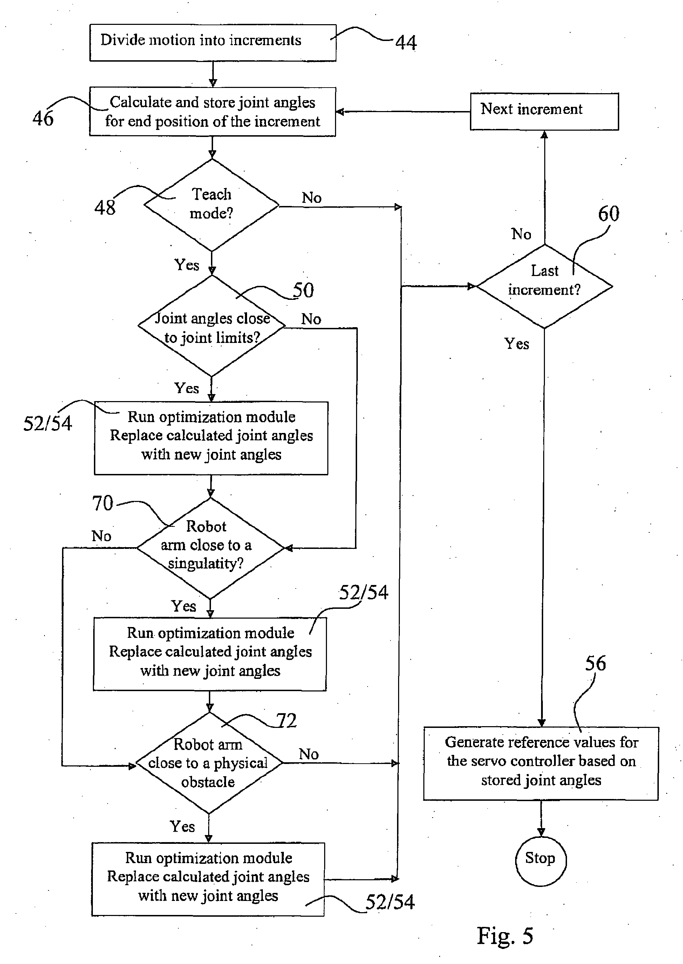

Figure 5 shows a flow diagram illustrating another example of a method for controlling a kinematically redundant robot according to the invention. In this example the method includes the additional step: checking whether the robot arm is closed to a singularity, block 70, and if this is the case running the optimization module, block 52, which searches in the null space of the redundant robot arm for a new joint configuration that increases the distance to the singularity with the tool centre point unchanged. Further, the method includes the additional step: checking whether the robot arm is closed to a physical obstacle in the workspace of the robot, block 72, and if this is the case to run the optimization module and search in the null space of the redundant robot arm for a new joint configuration that increases the distance to the obstacles with the tool centre point unchanged.

For a kinematically redundant 7 DOF robot as shown in figure 1, the position of the tool centre point TCP and a position on the base 3 of the robot arm can be kept still while the elbow 15 of the robot arm is moved. This leads to a physical phenomenon known as "self motion", which is a continuous motion of the joints that leaves the robot hand and accordingly the tool interface motionless. One natural representation of the elbow position is the "arm angle" of the robot arm. The optimization of the robot configuration in the null-space can be performed in many different ways. On example is disclosed in the patent document US5,430,643. US5,430,643 teaches a method to optimize an arm-angle of the robot. The arm angle of a kinematically redundant robot is well defined in US5,430,643. In the following, another example is described on how the optimization of a 7DOF robot can be performed.

In this example Newton-Raphson's optimization method is used to optimize an arm-angle of the robot arm, so that a goal function *f* reaches a desired target value $f_{des}$.

In one dimension, the Newton-Raphson update looks like

$$X_{i+1} = X_i - \frac{(f(X_i) - f_{des})}{f'(X_i)}$$

where *f* is the derivative of f with respect to *X*. The function f is chosen as one of the following:

1. Distance to nearest joint limit
2. Distance between robot and obstacle
3. Distance to singularity

Since there is only one redundant degree of freedom, it is only possible to optimize with respect to one criterion at a time. In the following it is assume that the joint limit distance is the active criterion. Hence, *f* is the following function:

$$f(\theta) = \min\{\theta_i - \beta_{i,min}, \beta_{i,max} - \theta_i\}$$

where $i = 1, ..., 7$ and $\beta_{i,\min}$ and $\beta_{i,\max}$ are the lower and upper joint limits for joint *i*. If *f* is negative, then a joint limit is violated. To have some margin against the joint limit, the distance should be at least $\beta_{des}$ degrees. Now, the derivative of f with respect to the arm-angle □ is calculated. The arm-angle is a highly non-linear function of all seven joints. The Jacobian matrix of the robot arm is used to express a linear relationship between joint velocities and the Cartesian velocities:

$$\dot{X} = J(\theta)\dot{\theta}$$

In the above equation $\theta$ is the vector of joint velocities, $\dot{\theta}_1$ to $\dot{\theta}_7$, and $\dot{X}$ is a vector consisting of the tool center point (TCP) velocities, both linear and rotational, and the arm-angle speed $\dot{\alpha}$. The vector is constructed such that $\dot{\alpha}$ is the last component.

Now we want to search for joint angle adjustments, $\Delta\theta$, that maintain the TCP position and orientation, but allow the arm-angle to change. Hence,

$$\begin{bmatrix} 0 \\ 0 \\ 0 \\ 0 \\ 0 \\ 0 \\ 1 \end{bmatrix} = J(\theta) \cdot \Delta\theta$$

gives an equation for the joint-angle adjustments needed for a unit change of the arm-angle. Note that this equation is a linearization of the robot kinematics at the configuration $\theta_1$ so it is only valid in a small neighborhood around $\theta$. We will compensate for that by solving the inverse kinematics again after each update of the arm-angle. Solving the above matrix equation gives us the derivative needed for the Newton-Raphson update:

$$f' = (J^{-1}\begin{bmatrix}0\\0\\0\\0\\0\\0\\1\end{bmatrix})_k$$

where k is the index of the joint that is closest to the joint limit. The update step for the arm-angle now looks like:

$$\alpha_{i+1} = \alpha_i - \frac{f(\theta_i) - \beta_{des}}{f'(\theta_i)}$$

Given the new arm-angle, the inverse kinematics is solved again for the desired TCP position and orientation. The update loop is continued until either:

1. $|f(\theta) - \beta_{des}| < \varepsilon$, that is, we have convergence
2. *J* becomes singular, in which case there is no null-space motion that can increase the distance to the joint limit for the critical joint

If instead the distance to a nearby obstacle or a singularity is limiting the robot motion, then the optimization is carried out in a similar way. The function *f* and its derivative can be obtained in analogous to the example above, with the constrain that the tool centre point is unchanged

## Claims

1. An industrial robot comprising:

   - a robot arm (1) with a redundant number of joints and provided with a tool interface (7) movable in a plurality of degrees of freedom, and a tool centre point (TCP) defined in relation to the tool interface, and
   - a control unit (10) adapted to receive movement instructions and based thereon control the movements of the robot arm, and to check whether any of the joints of the robot arm is close to its joint limit and if this is the case to use the redundant number of joints to avoid the joint limit with the tool centre point unchanged, wherein the control unit includes a motion planner (26) adapted to determine how the robot arm should move by carrying out an interpolation of the instructed movement, including a plurality of interpolation steps, and for each interpolation step calculate joint angles for the robot arm for an increment of the instructed movement, **characterized in that**
   - the robot comprises a user operated control device (12) for manually controlling the movements of the tool centre point and adapted to send information on user instructed movements for the tool centre point to the control unit,
   - the control unit is adapted to switch between a teach mode and a run-time mode, and to control the movements of the robot arm based on movement instructions from the user operated control device during the teach mode, and to control the movements of the robot arm in accordance with movement instructions from a control program during the run-time mode,
   - the control unit includes an optimizing module (27) which is adapted to search in the null space of the redundant robot arm for a new joint configuration that increases the distance to the joint limit with the tool centre point unchanged, and
   - the motion planner (26) is adapted to check whether any of the joints of the robot arm is close to its joint limit, and if this is the case to run said optimizing module and replace calculated joint angles for the increment with joint angles of the new joint configuration when the control unit is in the teach mode, and to omit the optimizing module when the control unit is in run-time mode.

2. The industrial robot according to claim 1, wherein the motion planner (26) is adapted to check whether any of the joints of the robot arm is close to its joint limit if the control unit is in teach mode, and to not check whether any of the joints of the robot arm is close to its joint limit if the control unit is in run-time mode.

3. The industrial robot according to any of the previous claims, wherein the robot arm (1) has seven degrees of freedom, and the optimising module uses an optimization method together with a 7x7 Jacobian matrix to search the null space of the arm.

4. The industrial robot according to claim 3, wherein said optimizing module (27) is adapted to search in the null space of the redundant robot arm for a new joint configuration that increases the distance to the joint limit while maintaining a safety distance to the joint limit.

**5.** The industrial robot according to any of the previous claims, wherein said optimizing module (27) is adapted to search in the null space of the redundant robot arm for a new joint configuration that increases the distance to a singularity with the tool centre point unchanged, the control unit (10) is adapted to switch between a teach mode and a run-time mode, and the motion planner (26) is adapted for each interpolation step to check whether the control unit is in teach mode or in run-time mode, and, if the control unit is in teach mode, to check whether the robot arm is close to a singularity, and if this is the case to run the optimizing module and to replace calculated joint angles for the increment with joint angles of the new joint configuration.

**6.** The industrial robot according to any of the previous claims, wherein the said optimizing module (27) is adapted to search in the null space of the redundant robot arm for a new joint configuration that increases the distance to a physical obstacle in the work space of the robot with the tool centre point unchanged, the control unit (10) is adapted to switch between a teach mode and a run-time mode, and the motion planner (26) is adapted for each interpolation step to check whether the control unit is in teach mode or in run-time mode, and if the control unit is in teach mode, to check for each interpolation step whether the robot arm is close to a physical obstacle in the work space of the robot, and if this is the case to run the optimizing module and to replace calculated joint angles for the increment with joint angles of the new joint configuration.

**7.** The industrial robot according to claim 6, wherein the control unit (10) includes a data storage for storing information on positions and shapes of obstacles in the work space of the robot, and the motion planner is adapted to determine the position of the robot arm based on the computed joint angles, and to determine whether the robot arm is close to an obstacle in the work space by comparing the position of the robot and with the positions of obstacles in the work space.

**8.** A method for controlling an industrial robot including a robot arm (1) with a redundant number of joints and provided with a tool interface (7) movable in a plurality of degrees of freedom, with a tool centre point (TCP) defined in relation to the tool interface, a user operated control device (12) for manually controlling the movements of the tool centre point, and the robot is adapted to switch between a teach mode and a run-time mode, and the movements of the robot arm is controlled based on movement instructions received from the user operated control device during the teach mode, and the movements of the robot arm is controlled in accordance with movement instructions from a control program during the run-time mode, wherein the method comprises:

- receiving a movement instruction,
- dividing the instructed movement into a plurality of increments,
- determining joint angles for the robot arm for each of the increments by carrying out an interpolation step for each increment, including calculating joint angles for the increment based on the instructed movement, and
- controlling the motion of the robot arm based on the determined joint angles, **characterized in that** the interpolation step includes checking whether the robot is in teach mode or in runtime mode, and if the robot is in teach mode execute the following optimization steps:
- checking whether any of the joints of the robot arm is close to its joint limit based on the calculated joint angles and limit values for the joints, and if this is the case,
- searching in the null space of the redundant robot arm for a new joint configuration that increases the distance to the joint limit with the tool centre point unchanged, and
- replacing the calculated joint angles with the joint angles of the new joint configuration, and omitting said optimization steps when the robot is in run-time mode.

**9.** The method according to claim 8, wherein the search is made for a new joint configuration which increases the distance to the joint limit while maintaining a safety distance to the joint limit.

**10.** The method according claim 8 or 9, wherein the optimization steps further include:

- checking whether the robot arm is close to a singularity, and if this is the case, and
- searching in the null space of the redundant robot arm for a new joint configuration that increases the distance to the singularity with the tool centre point unchanged.

**11.** The method according to any of the claims 8 - 10, wherein the optimization steps further includes:

- checking whether the robot arm is close to a physical obstacle in the work space of the robot, and if this is the case, to search in the null space of the redundant robot arm for a new joint configuration that increases the distance to the obstacle with the tool centre point unchanged.

**12.** The method according to any of the claims 8 - 11, wherein the step to search in the null space of the redundant robot arm includes using an optimization method to optimize the arm-angle of the robot arm.

**13.** The method according to any of the claims 8 - 12, wherein the robot arm has seven degrees of freedom, and the optimising module uses an optimization method together with a 7x7 Jacobian matrix which provides a relation between joint velocities and Cartesian velocities for the robot to search the null space of the arm.

**Patentansprüche**

**1.** Industrieroboter, umfassend:

- einen Roboterarm (1) mit einer redundanten Anzahl an Gelenken, der mit einer Werkzeugschnittstelle (7) ausgestattet ist, die in mehreren Freiheitsgraden beweglich ist, und einen Werkzeugmittelpunkt (TCP), der in Bezug auf die Werkzeugschnittstelle definiert ist, und
- eine Steuereinheit (10), die ausgeführt ist, Bewegungsbefehle zu empfangen und basierend darauf die Bewegungen des Roboterarms zu steuern und zu überprüfen, ob sich irgendeines der Gelenke des Roboterarms nahe an dessen Gelenkbegrenzung befindet, und wenn dies der Fall ist, die redundante Anzahl an Gelenken zu verwenden, um die Gelenkbegrenzung mit unverändertem Werkzeugmittelpunkt zu vermeiden, wobei die Steuereinheit einen Bewegungsplaner (26) umfasst, der ausgeführt ist, zu bestimmen, wie sich der Roboterarm bewegen sollte, durch Ausführen einer Interpolation der befohlenen Bewegung, die mehrere Interpolationsschritte umfasst, und Berechnen von Gelenkwinkeln für den Roboterarm für jeden Interpolationsschritt für ein Inkrement der befohlenen Bewegung, **dadurch gekennzeichnet, dass**
- der Roboter eine bedienergeführte Steuervorrichtung (12) zum manuellen Steuern der Bewegungen des Werkzeugmittelpunktes umfasst und ausgeführt ist, Informationen bezüglich vom Benutzer befohlenen Bewegungen für den Werkzeugmittelpunkt zu der Steuereinheit zu senden,
- die Steuereinheit ausgeführt ist, zwischen einem Lernmodus und einem Laufzeitmodus zu wechseln und die Bewegungen des Roboterarms basierend auf Bewegungsbefehlen von der bedienergeführten Steuervorrichtung während des Lernmodus zu steuern und die Bewegungen des Roboterarms gemäß Bewegungsbefehlen von einem Steuerprogramm während des Laufzeitmodus zu steuern,
- die Steuereinheit ein Optimierungsmodul (27) umfasst, das ausgeführt ist, im Nullraum des redundanten Roboterarms nach einer neuen Gelenkkonfiguration zu suchen, die den Abstand zur Gelenkbegrenzung mit unverändertem Werkzeugmittelpunkt erhöht, und
- der Bewegungsplaner (26) ausgeführt ist, zu überprüfen, ob irgendeines der Gelenke des Roboterarms sich nahe an dessen Gelenkbegrenzung befindet, und wenn dies der Fall ist, das Optimierungsmodul auszuführen und berechnete Gelenkwinkel für das Inkrement mit Gelenkwinkeln der neuen Gelenkkonfiguration zu ersetzen, wenn sich die Steuereinheit im Lernmodus befindet, und das Optimierungsmodul zu übergehen, wenn sich die Steuereinheit im Laufzeitmodus befindet.

**2.** Industrieroboter nach Anspruch 1, wobei der Bewegungsplaner (26) ausgeführt ist, zu überprüfen, ob sich irgendeines der Gelenke des Roboterarms nahe an dessen Gelenkbegrenzung befindet, wenn die Steuereinheit sich im Lernmodus befindet, und nicht zu überprüfen, ob sich irgendeines der Gelenke des Roboterarms nahe an dessen Gelenkbegrenzung befindet, wenn sich die Steuereinheit im Laufzeitmodus befindet.

**3.** Industrieroboter nach irgendeinem der vorhergehenden Ansprüche, wobei der Roboterarm (1) sieben Freiheitsgrade aufweist und das Optimierungsmodul ein Optimierungsverfahren zusammen mit einer 7x7-Jacobimatrix verwendet, um den Nullraum des Arms zu durchsuchen.

**4.** Industrieroboter nach Anspruch 3, wobei das Optimierungsmodul (27) ausgeführt ist, im Nullraum des redundanten Roboterarms nach einer neuen Gelenkkonfiguration zu suchen, die den Abstand zur Gelenkbegrenzung erhöht, während es einen Sicherheitsabstand zur Gelenkbegrenzung aufrechterhält.

**5.** Industrieroboter nach irgendeinem der vorhergehenden Ansprüche, wobei das Optimierungsmodul (27) ausgeführt ist, im Nullraum des redundanten Roboterarms nach einer neuen Gelenkkonfiguration zu suchen, die den Abstand zu einer Außergewöhnlichkeit mit unverändertem Werkzeugmittelpunkt erhöht, und die Steuereinheit (10) ausgeführt ist, zwischen einem Lernmodus und einem Laufzeitmodus zu wechseln, und der Bewegungsplaner (26) ausgeführt ist, für jeden Interpolationsschritt zu überprüfen, ob die Steuereinheit sich im Lernmodus oder im Laufzeitmodus befindet, und wenn sich die Steuereinheit im Lernmodus befindet, zu überprüfen, ob sich der Roboterarm nahe an einer Außergewöhnlichkeit befindet, und wenn dies der Fall ist, das Optimierungsmodul auszuführen und berechnete Gelenkwinkel für das Inkrement mit Gelenkwinkeln der neuen Gelenkkonfiguration zu ersetzen.

**6.** Industrieroboter nach irgendeinem der vorhergehenden Ansprüche, wobei das Optimierungsmodul (27) ausgeführt ist, im Nullraum des redundanten Roboterarms nach einer neuen Gelenkkonfiguration zu suchen, die den Abstand zu einem körperlichen Hindernis im Arbeitsbereich des Roboters mit unverändertem Werkzeugmittelpunkt erhöht, und die Steuereinheit (10) ausgeführt ist, zwischen einem Lernmodus und einem Laufzeitmodus zu wechseln, und der Bewegungsplaner (26) ausgeführt ist, für jeden Interpolationsschritt zu überprüfen, ob sich die Steuereinheit im Lernmodus oder im Laufzeitmodus befindet, und wenn sich die Steuereinheit im Lernmodus befindet, für jeden Interpolationsschritt zu überprüfen, ob der Roboterarm einem körperlichen Hindernis im Arbeitsbereich des Roboters nahe ist, und wenn dies der Fall ist, das Optimierungsmodul auszuführen und berechnete Gelenkwinkel für das Inkrement mit Gelenkwinkeln der neuen Gelenkkonfiguration zu ersetzen.

**7.** Industrieroboter nach Anspruch 6, wobei die Steuereinheit (10) einen Datenspeicher umfasst, um Informationen bezüglich Positionen und Formen der Hindernisse im Arbeitsbereich des Roboters zu speichern, und der Bewegungsplaner ausgeführt ist, die Position des Roboterarms basierend auf den berechneten Gelenkwinkeln zu bestimmen und durch Vergleichen der Position des Roboters mit den Positionen der Hindernisse im Arbeitsbereich zu bestimmen, ob der Roboterarm einem Hindernis im Arbeitsbereich nahe ist.

**8.** Verfahren zum Steuern eines Industrieroboters, der einen Roboterarm (1) mit einer redundanten Anzahl an Gelenken umfasst und mit einer Werkzeugschnittstelle (7) ausgestattet ist, die in mehreren Freiheitsgraden beweglich ist, mit einem Werkzeugmittelpunkt (TCP), der in Bezug auf die Werkzeugschnittstelle definiert ist, einer bedienergeführten Steuervorrichtung (12), um manuell die Bewegungen des Werkzeugmittelpunktes zu steuern, und wobei der Roboter ausgeführt ist, zwischen einem Lernmodus und einem Laufzeitmodus zu wechseln, und die Bewegungen des Roboterarms basierend auf Bewegungsbefehlen, die von der bedienergeführten Steuervorrichtung während des Lernmodus empfangen werden, gesteuert werden und die Bewegungen des Roboterarms gemäß Bewegungsbefehlen von einem Steuerprogramm während des Laufzeitmodus gesteuert werden, wobei das Verfahren umfasst:

- Empfangen eines Bewegungsbefehls,
- Unterteilen der befohlenen Bewegung in mehrere Inkremente,
- Bestimmen von Gelenkwinkeln für den Roboterarm für jedes der Inkremente durch Ausführen eines Interpolationsschritts für jedes Inkrement, der das Berechnen von Gelenkwinkeln für das Inkrement basierend auf der befohlenen Bewegung umfasst, und
- Steuern der Bewegung des Roboterarms basierend auf den bestimmten Gelenkwinkeln, **dadurch gekennzeichnet, dass** der Interpolationsschritt das Überprüfen umfasst, ob sich der Roboter im Lernmodus oder im Laufzeitmodus befindet, und wenn sich der Roboter im Lernmodus befindet, die folgenden Optimierungsschritte auszuführen:
- Überprüfen, ob sich irgendeines der Gelenke des Roboterarms nahe an dessen Gelenkbegrenzung befindet, basierend auf den berechneten Gelenkwinkeln und Grenzwerten für die Gelenke, und wenn dies der Fall ist,
- Suchen im Nullraum des redundanten Roboterarms nach einer neuen Gelenkkonfiguration, die den Abstand zur Gelenkbegrenzung mit unverändertem Werkzeugmittelpunkt erhöht, und
- Ersetzen der berechneten Gelenkwinkel mit den Gelenkwinkeln der neuen Gelenkkonfiguration und Übergehen der Optimierungsschritte, wenn sich der Roboter im Laufzeitmodus befindet.

**9.** Verfahren nach Anspruch 8, wobei das Suchen nach einer neuen Gelenkkonfiguration erfolgt, die den Abstand zur Gelenkbegrenzung erhöht, während ein Sicherheitsabstand zur Gelenkbegrenzung aufrechterhalten wird.

**10.** Verfahren nach Anspruch 8 oder 9, wobei die Optimierungsschritte weiter umfassen:

- Überprüfen, ob der Roboterarm sich nahe einer Außergewöhnlichkeit befindet, und wenn dies der Fall ist,
- Suchen im Nullraum des redundanten Roboterarms nach einer neuen Gelenkkonfiguration, die den Abstand zu der Außergewöhnlichkeit mit unverändertem Werkzeugmittelpunkt erhöht.

**11.** Verfahren nach irgendeinem der Ansprüche 8 bis 10, wobei die Optimierungsschritte weiter umfassen:

- Überprüfen, ob sich der Roboterarm nahe an einem körperlichen Hindernis im Arbeitsbereich des Roboters befindet und wenn dies der Fall ist, im Nullraum des redundanten Roboterarms nach einer neuen Gelenkkonfiguration zu suchen, die den Abstand zu dem Hindernis mit unverändertem Werkzeugmittelpunkt erhöht.

**12.** Verfahren nach irgendeinem der Ansprüche 8 bis 11, wobei der Schritt des Durchsuchens des Nullraums des redundanten Roboterarms das Verwenden eines Optimierungsverfahrens umfasst, um den Armwinkel des Roboterarms zu optimieren.

**13.** Verfahren nach irgendeinem der Ansprüche 8 bis 12, wobei der Roboterarm sieben Freiheitsgrade aufweist und das Optimierungsmodul ein Optimierungsverfahren zusammen mit einer 7x7-Jacobimatrix verwendet, die eine Beziehung zwischen Geschwindigkeiten des Gelenkes und kartesischen Geschwindigkeiten für den Roboter bereitstellt, um den Nullraum des Arms zu durchsuchen.

**Revendications**

**1.** Robot industriel comportant :

- un bras robotisé (1) doté d'un nombre redondant d'articulations et muni d'une interface (7) d'outil mobile suivant une pluralité de degrés de liberté, et d'un point central d'outil (TCP) défini par rapport à l'interface d'outil, et
- une unité (10) de commande prévue pour recevoir des instructions de mouvement et commander d'après celles-ci les mouvements du bras robotisé, et pour vérifier si l'une quelconque des articulations du bras robotisé est proche de sa limite d'articulation et, si c'est le cas, pour utiliser le nombre redondant d'articulations pour éviter la limite d'articulation en laissant le point central d'outil inchangé, l'unité de commande comprenant un planificateur (26) de déplacement prévu pour déterminer la façon dont le bras robotisé doit se déplacer en réalisant une interpolation du mouvement prescrit comprenant une pluralité d'étapes d'interpolation et, à chaque étape d'interpolation, calculer des angles d'articulations du bras robotisé pour un incrément du mouvement prescrit, **caractérisé en ce que**
- le robot comporte un dispositif (12) de commande actionné par l'utilisateur servant à commander manuellement les mouvements du point central d'outil et prévu pour envoyer des informations sur des mouvements prescrits par l'utilisateur pour le point central d'outil à l'unité de commande,
- l'unité de commande est prévue pour basculer entre un mode d'apprentissage et un mode d'exécution, et pour commander les mouvements du bras robotisé d'après des instructions de mouvement provenant du dispositif de commande actionné par l'utilisateur pendant le mode d'apprentissage, et pour commander les mouvements du bras robotisé en fonction d'instructions de mouvement provenant d'un programme de commande pendant le mode d'exécution,
- l'unité de commande comprend un module (27) d'optimisation qui est prévu pour rechercher dans le noyau du bras robotisé redondant une nouvelle configuration d'articulations qui accroît la distance à la limite d'articulation en laissant le point central d'outil inchangé, et
- le planificateur (26) de déplacement est prévu pour vérifier si l'une quelconque des articulations du bras robotisé est proche de sa limite d'articulation, et, si c'est le cas, pour exploiter ledit module d'optimisation et remplacer des angles d'articulations calculés pour l'incrément par des angles d'articulations de la nouvelle configuration d'articulations lorsque l'unité de commande se trouve dans le mode d'apprentissage, et pour se passer du module d'optimisation lorsque l'unité de commande se trouve en mode d'exécution.

**2.** Robot industriel selon la revendication 1, le planificateur (26) de déplacement étant prévu pour vérifier si l'une quelconque des articulations du bras robotisé est proche de sa limite d'articulation si l'unité de commande se trouve en mode d'apprentissage, et pour ne pas vérifier si l'une quelconque des articulations du bras robotisé est proche de sa limite d'articulation si l'unité de commande se trouve en mode d'exécution.

**3.** Robot industriel selon l'une quelconque des revendications précédentes, le bras robotisé (1) possédant sept degrés de liberté, et le module d'optimisation utilisant une méthode d'optimisation combinée à une matrice jacobienne 7x7 pour chercher dans le noyau du bras.

**4.** Robot industriel selon la revendication 3, ledit module (27) d'optimisation étant prévu pour rechercher dans le noyau du bras robotisé redondant une nouvelle configuration d'articulations qui accroît la distance à la limite d'articulation tout en maintenant une distance de sûreté par rapport à la limite d'articulation.

**5.** Robot industriel selon l'une quelconque des revendications précédentes, ledit module (27) d'optimisation étant prévu pour rechercher dans le noyau du bras robotisé redondant une nouvelle configuration d'articulations qui accroît la distance à une singularité en laissant le point central d'outil inchangé, l'unité (10) de commande étant prévue pour basculer entre un mode d'apprentissage et un mode d'exécution, et le planificateur (26) de déplacement étant prévu, à chaque étape d'interpolation, pour vérifier si l'unité de commande se trouve en mode d'apprentissage ou en mode d'exécution, et, si l'unité de commande se trouve en mode d'apprentissage, pour vérifier si le bras robotisé est proche d'une singularité et, si c'est le cas, pour exploiter le module d'optimisation et remplacer des angles d'articulations calculés pour l'incrément par des angles d'articulations de la nouvelle configuration d'articulations.

6. Robot industriel selon l'une quelconque des revendications précédentes, ledit module (27) d'optimisation étant prévu pour rechercher dans le noyau du bras robotisé redondant une nouvelle configuration d'articulations qui accroît la distance à un obstacle physique dans l'espace de travail du robot en laissant le point central d'outil inchangé, l'unité (10) de commande étant prévue pour basculer entre un mode d'apprentissage et un mode d'exécution, et le planificateur (26) de déplacement étant prévu, à chaque étape d'interpolation, pour vérifier si l'unité de commande se trouve en mode d'apprentissage ou en mode d'exécution, et si l'unité de commande se trouve en mode d'apprentissage, pour vérifier à chaque étape d'interpolation si le bras robotisé est proche d'un obstacle physique dans l'espace de travail du robot, et, si c'est le cas, pour exploiter le module d'optimisation et remplacer des angles d'articulations calculés pour l'incrément par des angles d'articulations de la nouvelle configuration d'articulations.

7. Robot industriel selon la revendication 6, l'unité (10) de commande comprenant un stockage de données servant à stocker des informations sur des positions et des formes d'obstacles dans l'espace de travail du robot, et le planificateur de déplacement étant prévu pour déterminer la position du bras robotisé d'après les angles d'articulations calculés, et pour déterminer si le bras robotisé est proche d'un obstacle dans l'espace de travail en comparant la position du robot aux positions d'obstacles dans l'espace de travail.

8. Procédé de commande d'un robot industriel comprenant un bras robotisé (1) doté d'un nombre redondant d'articulations et muni d'un interface (7) d'outil mobile suivant une pluralité de degrés de liberté, avec un point central d'outil (TCP) défini par rapport à l'interface d'outil, un dispositif (12) de commande actionné par l'utilisateur servant à commander manuellement les mouvements du point central d'outil, et le robot étant prévu pour basculer entre un mode d'apprentissage et un mode d'exécution, et les mouvements du bras robotisé étant commandé d'après des instructions de mouvement reçues en provenance du dispositif de commande actionné par l'utilisateur pendant le mode d'apprentissage, et les mouvements du bras robotisé étant commandés en fonction d'instructions de mouvement provenant d'un programme de commande pendant le mode d'exécution, le procédé comportant les étapes consistant à :

- recevoir une instruction de mouvement,
- diviser le mouvement prescrit en une pluralité d'incréments,
- déterminer des angles d'articulations pour le bras robotisé pour chacun des incréments en réalisant une étape d'interpolation pour chaque incrément, comprenant le calcul d'angles d'articulations pour l'incrément d'après le mouvement prescrit, et
- commander le déplacement du bras robotisé d'après les angles d'articulations déterminés, **caractérisé en ce que** l'étape d'interpolation comprend l'action de vérifier si le robot se trouve en mode d'apprentissage ou en mode d'exécution et, si le robot se trouve en mode d'apprentissage, d'exécuter les étapes d'optimisation suivantes :
- vérifier si l'une quelconque des articulations du bras robotisé est proche de sa limite d'articulation d'après les angles d'articulations calculés et des valeurs limites pour les articulations, et si c'est le cas,
- rechercher dans le noyau du bras robotisé redondant une nouvelle configuration d'articulations qui accroît la distance à la limite d'articulation en laissant le point central d'outil inchangé, et
- remplacer les angles d'articulations calculés par les angles d'articulations de la nouvelle configuration d'articulations, et omettre lesdites étapes d'optimisation lorsque le robot se trouve en mode d'exécution.

9. Procédé selon la revendication 8, la recherche portant sur une nouvelle configuration d'articulations qui accroît la distance à la limite d'articulation tout en maintenant une distance de sûreté par rapport à la limite d'articulation.

10. Procédé selon la revendication 8 ou 9, les étapes d'optimisation comprenant en outre les actions de :

- vérifier si le bras robotisé est proche d'une singularité, et si c'est le cas,
- rechercher dans le noyau du bras robotisé redondant une nouvelle configuration d'articulations qui accroît la distance à la singularité en laissant le point central d'outil inchangé.

11. Procédé selon l'une quelconque des revendications 8 à 10, les étapes d'optimisation comprenant en outre les actions de :

- vérifier si le bras robotisé est proche d'un obstacle physique dans l'espace de travail du robot, et si c'est le cas, rechercher dans le noyau du bras robotisé redondant une nouvelle configuration d'articulations qui accroît la distance à l'obstacle en laissant le point central d'outil inchangé.

**12.** Procédé selon l'une quelconque des revendications 8 à 11, l'étape consistant à chercher dans le noyau du bras robotisé redondant comprenant l'utilisation d'une méthode d'optimisation pour optimiser l'angle de bras du bras robotisé.

**13.** Procédé selon l'une quelconque des revendications 8 à 12, le bras robotisé possédant sept degrés de liberté et le module d'optimisation utilisant une méthode d'optimisation combinée à une matrice jacobienne 7x7 qui donne une relation entre des vitesses d'articulations et des vitesses cartésiennes du robot pour chercher dans le noyau du bras.

TCP
7
6
5
4
3
2
1
12
10
14
R
T

Fig.1

22
Communication module
20
24
14
Executor
Program storage
R/T
Motion planner
Optimization module
26
27
Servo controller
28
Drive devices
30
R
M
10

Fig. 2

B
$l_1$
$l_2$
$l_3$
A
40

Fig. 3

Receive movement instruction
40
Instruction to motion planner
42
Divide motion into increments
44
Calculate and store joint angles for end position of the increment
46
Next increment
Teach mode?
48
No
Yes
Joint angles close to joint limits?
50
No
Yes
Run optimization module
52
Replace calculated joint angles with new joint angles
54
Generate reference values for the servo controller based on stored joint angles
56
Last increment
60
No
Yes
Stop

Fig. 4

Divide motion into increments
44
Calculate and store joint angles for end position of the increment
46
Next increment
Teach mode?
48
No
Yes
60
No
Last increment?
Joint angles close to joint limits?
50
No
Yes
Yes
Run optimization module Replace calculated joint angles with new joint angles
52/54
70
Robot arm close to a singulatity?
No
Yes
52/54
Run optimization module Replace calculated joint angles with new joint angles
56
72
Robot arm close to a physical obstacle
No
Generate reference values for the servo controller based on stored joint angles
Yes
Run optimization module Replace calculated joint angles with new joint angles
Stop
52/54

Fig. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5430643 A

### Non-patent literature cited in the description

- Avoidance of obstacles and joint limits for end-effector tracking in redundant manipulators. **JIN-LIANG CHEN et al.** CONTROL, AUTOMATION, ROBOTICS AND VISION, 2002, ICARCV 2002, 7TH INTERNATIONAL CONFERENCE. IEEE, 02 December 2002, vol. 2, 839-844